**Europäisches Patentamt**

**European Patent Office**

**Office européen des brevets**

(19)

(11) **EP 1 168 039 A2**

(12) **EUROPEAN PATENT APPLICATION**

(43) Date of publication:
**02.01.2002 Bulletin 2002/01**

(51) Int Cl.⁷: **G02F 1/03**, G02F 1/21,
H04B 10/155

(21) Application number: **01113353.5**

(22) Date of filing: **01.06.2001**

(84) Designated Contracting States:
**AT BE CH CY DE DK ES FI FR GB GR IE IT LI LU
MC NL PT SE TR**
Designated Extension States:
**AL LT LV MK RO SI**

(30) Priority: **30.06.2000 JP 2000199896**

(71) Applicant: **MITSUBISHI DENKI KABUSHIKI
KAISHA**
Tokyo 100-8310 (JP)

(72) Inventors:
• **Ishida, Kazuyuki**
  Chiyoda-ku, Tokyo 100-8310 (JP)
• **Shimizu, Katsuhiro**
  Chiyoda-ku, Tokyo 100-8310 (JP)
• **Kobayashi, Yukio**
  Chiyoda-ku, Tokyo 100-8310 (JP)

(74) Representative: **Pfenning, Meinig & Partner**
**Mozartstrasse 17**
**80336 München (DE)**

(54) **Optical transmission apparatus, and output stabilization control method for an optical modulator used in the optical transmission apparatus**

(57)     The optical transmission apparatus has an optical modulator (2) of Mach-Zehnder type, a light source (1) which supplies an optical signal to the optical modulator (2), a branching filter (3) for taking out a part of an output optical signal, an optical spectrum monitor (4) for monitoring an optical spectrum of an output optical signal taken out, an error signal generator circuit (11) for generating an error signal that shows a bias voltage error based on a result of this monitoring, and a bias voltage control circuit (5) for applying a bias voltage added with this error signal to the optical modulator (2).

# FIG.1

EP 1 168 039 A2

## Description

FIELD OF THE INVENTION

This invention relates to an external modulation type optical transmission apparatus that is used in an optical communication system, and an output stabilization control method for an optical modulator used for this apparatus. Particularly, this invention relates to an optical transmission apparatus using a Mach-Zehnder optical modulator and an output stabilization control method for an optical modulator used for this apparatus.

BACKGROUND OF THE INVENTION

Conventionally, a direct modulation system has been used in optical communication systems. In this direct modulation system, an optical modulation signal is generated based on a driving signal to a laser diode and a light intensity signal that is proportional to an electric signal of the driving signal is obtained. However, in a super-high-speed broad-band optical communication system having a transmission speed that exceeds a few Gbits/s, chirping occurs. When chirping occurs, an optical wavelength changes during a direct modulation. This chirping limits the transmission capacity.

On the other hand, chirping almost does not occur in the external modulation system. Therefore, in the external modulation system, it is possible to modulate relatively easily in an operation band of 10 GHz or above. Therefore, the external modulation system has come to be applied to a super-high-speed broad-band large-capacity optical communication system. One of the most general optical modulators as an external modulator, is a Mach-Zehnder optical modulator that uses lithium niobate ($LiNbO_3$).

An output optical signal I(t) modulated by a modulation signal S(t) by using the Mach-Zehnder optical modulator is expressed by equation (1):

$$I(t) = k \{1 + \cos(\beta \cdot S(t) + \delta)\} \qquad (1)$$

where k represents a proportion coefficient, $\beta$ represents a degree of modulation, and $\delta$ represents a phase at the operating point of the Mach-Zehnder optical modulator.

Given that the modulation signal S(t) is a binary digital signal, the degree of modulation $\beta$ is $\beta=\pi$, and the initial phase $\delta$ is $\delta=\pi/2$ by applying an adequate DC voltage (bias voltage) to the Mach-Zehnder optical modulator, then the Mach-Zehnder optical modulator outputs the output optical signal I(t) that switches ON/OFF in proportionate to the modulation signal S(t).

Given that the degree of modulation $\beta$ is $\beta=2\pi$, the initial phase $\delta$ is $\delta=0$ by applying an adequate bias voltage to the Mach-Zehnder optical modulator, and the modulation signal S (t) is used, then when a sine wave having a repeating frequency R is input, the output optical signal I(t) is expressed by equation (2).

$$I(t) = k \{1 + \cos (2\pi \cdot \sin(2\pi fc(t))) \qquad (2)$$

Hence, the output optical signal I (t) expressed by equation (2) is output as an optical signal that switches ON/OFF at a repeating frequency 2R that is double the repeating frequency fc.

There would be no problem if the phase $\delta$ is constant. However, a typical optical modulator using lithium niobate has a problem that the operating point undesirably drifts. Two types of drift are known. That is, a thermal drift induced by the pyroelectric effect caused by a temperature change; and a DC drift induced by a charge distribution over the surface of the element of the optical modulator produced by the bias voltage applied to the electrode of the optical modulator. In order to compensate variance of the operating point caused by these types of drift, it is necessary to apply a bias voltage to the optical modulator in such a manner so as to attain an optimal operating point.

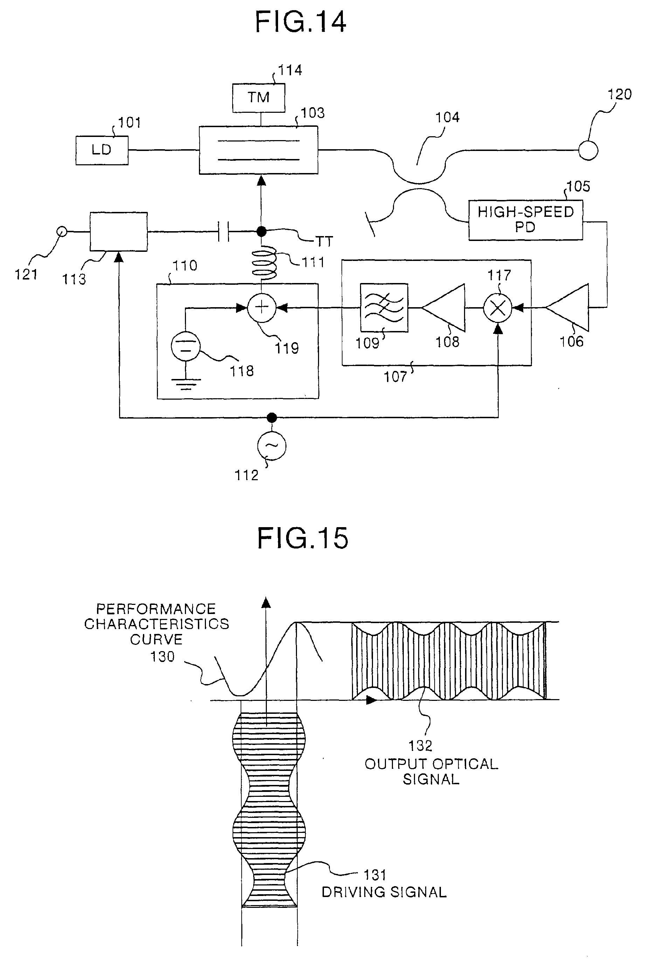

Fig. 14 is a block diagram depicting an arrangement of a conventional optical transmitter capable of stabilizing a bias voltage applied to the optical modulator using lithium niobate (see Japanese Patent Application Laid-Open No. 5-142504). Continuous optical signals emitted from a light source 101 are input into a Mach-Zehnder optical modulator 103 using lithium niobate. A terminator 114 is connected to the Mach-Zehnder optical modulator 103 and a driving signal for driving the Mach-Zehnder optical modulator 103 and a bias voltage are applied to the Mach-Zehnder optical modulator 103 through a node TT.

Output optical signal modulated by the Mach-Zehnder optical modulator 103 is output to an output terminal 120 through a branching filter 104, and a part of the output optical signal is input into a photo diode 105. The photo diode 105 converts the input part of the output optical signal into an electric signal, amplifies the electric signal by means of a pre-amplifier 106, and outputs the same to a synchronous detector circuit 107.

The synchronous detector circuit 107 conducts synchronous detection between the electric signal input from the pre-amplifier 106 and a low frequency signal output from a dither signal generator 112. The synchronous detector circuit 107 includes a mixer 117, which mixes the electric signal input from the pre-amplifier 106 with the low frequency signal output from the dither signal generator 112. The resulting mixed signal is input into a low pass filter 109 through an operational amplifier 108, and the signal having passed through the low pass filter 109 is output to a bias voltage control circuit 110.

The bias voltage control circuit 110 includes a DC voltage 118 and an adder 119. The adder 119 adds an output signal from the synchronous detector circuit 107 and a bias voltage output from a DC power source 118, and outputs the sum as a bias voltage to the Mach-Zehnder optical modulator 103 from the node TT through an inductor 111. On the other hand, a driving signal is input into an input terminal 121 and output to a low frequency superimposing circuit 113 through a driving circuit 124. The low frequency superimposing circuit 113 superimposes the input driving signal and a low frequency signal output from the dither signal generator 112, and applies the resulting signal as a driving signal to the Mach-Zehnder optical modulator 103 from the node TT through a capacitor. Hence, both the driving signal superimposed with the low frequency signal and the bias voltage under the bias voltage control are applied to the Mach-Zehnder optical modulator 103 from the node TT.

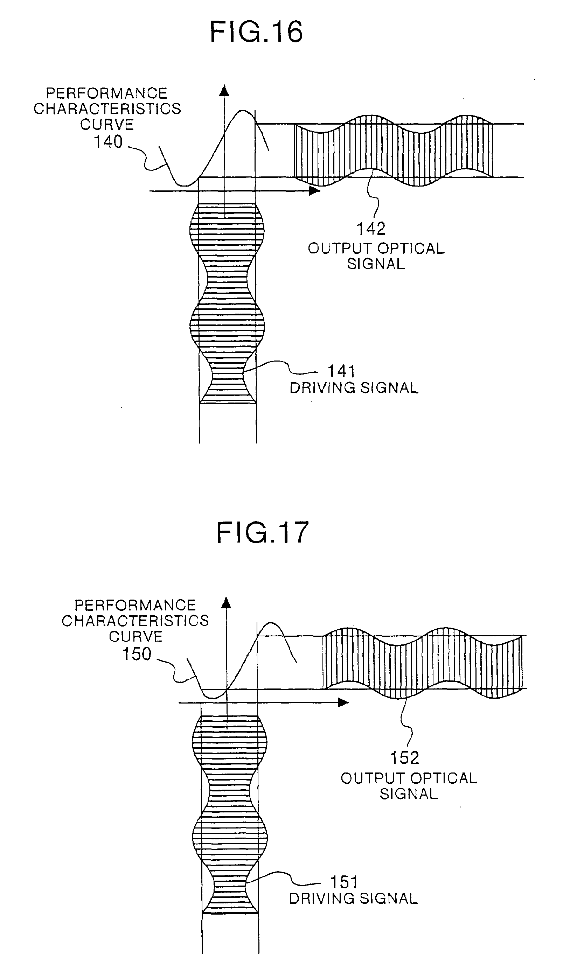

How the bias voltage to the Mach-Zehnder optical modulator is controlled in the conventional optical transmitter will now be explained with reference to Fig. 15 to Fig. 17. Fig. 15 is a view explaining a modulation operation of the Mach-Zehnder optical modulator 103 when a bias voltage (phase δ) is at an adequate value. Operating characteristic curve 130 of the Mach-Zehnder optical modulator 103 represents the operating characteristic curve expressed by the equation (1), and indicates a state where the bias voltage (phase δ) is adequately set. In this case, upon input into the Mach-Zehnder optical modulator 103, a driving signal (input signal) 131, which has been superimposed with the low frequency signal, is modulated by the operating characteristic curve 130 and output as an output optical signal 132. The output optical signal 132 does not include a low frequency component (f[Hz]) of the low frequency signal superimposed on the driving signal, and a low frequency component (2f[Hz]) double the low frequency component (f[Hz]) is generated. Thus, after a part of the output optical signal 132 is received by the photo diode 105, amplified by the pre-amplifier 106, and let undergo the synchronous detection by the synchronous detector circuit 107, the resulting signal outputs "0". In this case, because no signal component is added by the adder 119 of the bias voltage control circuit 110, the current bias voltage is maintained and applied intact to the Mach-Zehnder optical modulator 103.

On the other hand, Fig. 16 is a view explaining a modulation operation by the Mach-Zehnder optical modulator 103 when the bias voltage is at a relatively high value compared with an adequate value. Operating characteristic curve 140 of the Mach-Zehnder optical modulator 103 indicates a state where the bias voltage is set to a relatively high value compared with an adequate value. In this case, upon input into the Mach-Zehnder optical modulator 103, a driving signal 141, which is the same as the driving signal 131 superimposed with the low frequency signal, is modulated by the operating characteristic curve 140 and output as an output optical signal 142. The output optical signal 142 includes a low frequency component (f[Hz]) of the low frequency signal superimposed on the driving signal, and the phase of the low frequency component (f[Hz]) is inverted with respect to the phase of the low frequency component (f[Hz]) superimposed on the driving signal. Hence, the synchronous detector circuit 107 conducts synchronous detection of the low frequency component (f[Hz]), and outputs a "negative" voltage to the bias voltage control circuit 110. In this case, the adder 119 of the bias voltage control circuit 110 adds the negative voltage to the bias voltage output from the DC power source 118, thereby effecting control to reduce the current bias voltage so as to be approximated to an adequate bias voltage.

Similarly, Fig. 17 is a view explaining a modulation operation by the Mach-Zehnder optical modulator 103 when the bias voltage is at a relatively low value compared with an adequate value. Operating characteristic curve 150 of the Mach-Zehnder optical modulator 103 indicates a state where the bias voltage is set at a relatively low value compared with an adequate value. In this case, upon input into the Mach-Zehnder optical modulator 103, a driving signal 151, which is the same as the driving signal 131 superimposed with the low frequency signal, is modulated by the operating characteristic curve 150 and output as an output optical signal 152. The output optical signal 152 includes a low frequency component (f[Hz]) of the low frequency signal superimposed on the driving signal, and the phase of the low frequency component (f[Hz]) coincides with the phase of a low frequency component (f[Hz]) superimposed on the driving signal. Hence, the synchronous detector circuit 107 conducts synchronous detection of the low frequency component (f[Hz]) and outputs a "positive" voltage to the bias voltage control circuit 110. In this case, the adder 119 of the bias voltage control circuit 110 adds the positive voltage to the bias voltage output from the DC power source 118, and effects control to increase the current bias voltage so as to be approximated to an adequate bias voltage.

As explained above, according to the bias voltage control for controlling a bias voltage applied to the Mach-Zehnder optical modulator of the conventional optical transmission apparatus, a part of the output optical signal output from the Mach-Zehnder optical modulator 103 is detected. The synchronous detector circuit 107 generates an error signal corresponding to a deviation of the bias voltage from an optimum operation point. The bias voltage control circuit 110 controls the bias voltage so that this error signal becomes smaller, thereby maintaining a stable bias voltage.

According to the bias voltage control for controlling a bias voltage applied to the Mach-Zehnder optical modulator 103 of the conventional optical transmission apparatus, a low-frequency signal is superimposed on the driving signal. However, the low-frequency superimposing circuit 113 for superimposing this low-frequency signal with the driving signal uses devices like a voltage control attenuator and a voltage control variable gain amplifier not shown. Therefore, when the band of the driving signal becomes 10 GHz or above, the operation band for these devices becomes in shortage, and a waveform distortion is generated in the driving signal to be applied to the Mach-Zehnder optical modulator 103. As a result, there arises a problem of occurrence of quality degradation in the output optical signal.

From the viewpoint of the quality of the optical transmission signal and the operation of an automatic control circuit at an operation point, it is preferable that the amplitude of the driving signal for driving the Mach-Zehnder optical modulator is the amplitude that is necessary for the value of the output optical signal I(t) shown in the equation (1) to change from "0" to "k". However, there has been a problem that an apparatus for automatically controlling the amplitude of this driving signal has not yet been realized.

SUMMARY OF THE INVENTION

It is an object of this invention to provide an optical transmission apparatus capable of preventing quality degradation of an output optical signal by easily carrying out a stabilization control of a bias voltage even when the band of the driving signal becomes 10 GHz or above, capable of carrying out a stable control of the bias voltage even when a plurality of waveform lights are modulated, and capable of carrying out an amplitude control of the driving signal. It is also an object of this invention to provide an output stabilization control method for an optical modulator used in the optical transmission apparatus.

The optical transmission apparatus according to one aspect of this invention comprises an optical modulator of Mach-Zehnder type; a light source which inputs an optical signal to the optical modulator; a driving signal outputting unit which outputs to the optical modulator a driving signal for modulating an optical signal input into the optical modulator from the light source; a bias applying unit which applies a bias voltage to the optical modulator; a monitoring unit which monitors an optical spectrum of an output optical signal output from the optical modulator; and a bias voltage controlling unit which controls the bias voltage based on an optical spectrum shape monitored by the monitoring unit.

According to the above-mentioned aspect, the monitoring unit monitors an optical spectrum of an output optical signal output from the optical modulator, and the bias voltage controlling unit feedback controls the bias voltage based on an optical spectrum shape monitored by the monitoring unit.

The optical transmission apparatus according to another aspect of this invention comprises a plurality of optical transmission units, each having an optical modulator of Mach-Zehnder type, a light source which inputs an optical signal to the optical modulator, a driving signal outputting unit which outputs to the optical modulator a driving signal for modulating an optical signal input into the optical modulator from the light source, and a bias applying unit which applies a bias voltage to the optical modulator, with optical signals having wavelengths different from each other output from respective light sources; a multiplexer which combines output optical signals output from respective optical modulators of the optical transmission unit; a monitoring unit which monitors a multi-wavelength optical spectrum of an output optical signal output from the multiplexer; and a bias voltage controlling unit which controls a bias voltage of each bias applying unit of the optical transmission unit based on a multi-wavelength optical spectrum shape monitored by the monitoring unit.

According to the above-mentioned aspect, the multiplexer combines output optical signals obtained by modulating optical signals having wavelengths different from each other that have been output from the light sources of the respective transmission units. The monitoring unit monitors a multi-wavelength optical spectrum of an output optical signal output from the multiplexer. The bias voltage controlling unit feedback controls the bias voltage of each bias applying unit for each modulator of the optical transmission unit based on a multi-wavelength optical spectrum shape monitored by the monitoring unit.

The output stabilization control method according to still another aspect of this invention is a method, for an optical modulator used in an optical transmission apparatus, of inputting an optical signal to a Mach-Zehnder optical modulator, applying a driving signal and a bias voltage, and modulating and outputting the optical signal based on the driving signal. The output stabilization control method comprises a monitoring step of monitoring an optical spectrum of an output optical signal that has been modulated and output from the optical modulator; and a bias voltage control step of controlling the bias voltage based on an optical spectrum shape monitored at the monitoring step.

According to the above-mentioned aspect, an optical spectrum of an output optical signal that has been modulated and output from the optical modulator is monitored at the monitoring step, and the bias voltage is controlled at the bias voltage control step based on an optical spectrum shape monitored at the monitoring step.

The output stabilization control method according to still another aspect of this invention is a method, for an optical modulator used in an optical transmission apparatus, of inputting an optical signal to a Mach-Zehnder optical modulator, applying a driving signal and a bias voltage, and modulating and outputting the optical signal based on the driving signal. The output stabilization control method comprises a monitoring step of monitoring an optical spectrum of an output optical signal that has been modulated and output from the optical modulator; and a driving signal level control step of controlling a signal level of the driving signal based on an optical spectrum shape monitored at the monitoring step.

According to the above-mentioned aspect, an optical spectrum of an output optical signal that has been modulated and output from the optical modulator is monitored at the monitoring step, and the signal level of the driving signal is controlled at the driving signal level control step based on an optical spectrum shape monitored at the monitoring step.

The output stabilization control method according to still another aspect of this invention is a method, for an optical modulator used for an optical transmission apparatus, of inputting an optical signal into a Mach-Zehnder optical modulator having two electric signal input terminals, applying a driving signal and a bias voltage, and modulating and outputting the optical signal based on the driving signal. The output stabilization control method comprises a monitoring step of monitoring an optical spectrum of an output optical signal that has been modulated and output from the optical modulator; and a phase difference control step of controlling a phase difference between two driving signals input into the electric input terminals based on an optical spectrum shape monitored at the monitoring step.

According to this invention, an optical spectrum of an output optical signal that has been modulated and output from the optical modulator is monitored at the monitoring step, and the phase difference between two driving signals input into the electric input terminals is controlled at the phase difference control step based on an optical spectrum shape monitored at the monitoring step.

Other objects and features of this invention will become apparent from the following description with reference to the accompanying drawings.

BRIEF DESCRIPTION OF THE DRAWINGS

Fig. 1 is a block diagram showing a structure of an optical transmission apparatus according to a first embodiment of this invention.
Fig. 2 is a diagram showing a monitor result of an optical spectrum monitor when the bias voltage of a Mach-Zehnder optical modulator shown in Fig. 1 is at a proper value.
Fig. 3 is a diagram showing a monitor result of an optical spectrum monitor when the bias voltage of the Mach-Zehnder optical modulator shown in Fig. 1 is at a slightly higher value than a proper value.
Further, Fig. 4 is a diagram showing a monitor result of an optical spectrum monitor when the bias voltage of the Mach-Zehnder optical modulator shown in Fig. 1 is at a slightly lower value than a proper value.
Fig. 5 is a block diagram showing a structure of an optical transmission apparatus according to a second embodiment of this invention.
Fig. 6 is a block diagram showing a structure of an optical transmission apparatus according to a third embodiment of this invention.
Fig. 7 is a block diagram showing a structure of an optical transmission apparatus according to a fourth embodiment of this invention.
Fig. 8 is a diagram showing a spectrum area that each photodiode shown in Fig. 7 monitors.
Fig. 9 is a block diagram showing a structure of an optical transmission apparatus according to a fifth embodiment of this invention.
Fig. 10 is a diagram showing a detailed structure of a grating and a photodiode array shown in Fig. 9.
Fig. 11 is a diagram showing a spectrum area that each photodiode of the photodiode array shown in Fig. 9 monitors .
Fig. 12 is a block diagram showing a structure of an optical transmission apparatus according to a sixth embodiment of this invention.
Fig. 13 is a block diagram showing a structure of an optical transmission apparatus according to a seventh embodiment of this invention.
Fig. 14 is a block diagram showing a structure of a conventional optical transmission apparatus.
Fig. 15 is a diagram for explaining a modulation operation of a Mach-Zehnder optical modulator when the bias voltage of the Mach-Zehnder optical modulator shown in Fig. 14 is at a proper value.
Fig. 16 is a diagram for explaining a modulation operation of a Mach-Zehnder optical modulator when the bias voltage of the Mach-Zehnder optical modulator shown in Fig. 14 is at a value slightly higher than a proper value.
Fig. 17 is a diagram for explaining a modulation operation of a Mach-Zehnder optical modulator when the bias voltage of the Mach-Zehnder optical modulator shown in Fig. 14 is at a value slightly lower than a proper value.

DESCRIPTION OF THE PREFERRED EMBODIMENTS

Preferred embodiments of an optical transmission apparatus and an output stabilization control method of an optical modulator to be used for this apparatus relating to this invention will be explained in detail below with reference to the accompanying drawings.

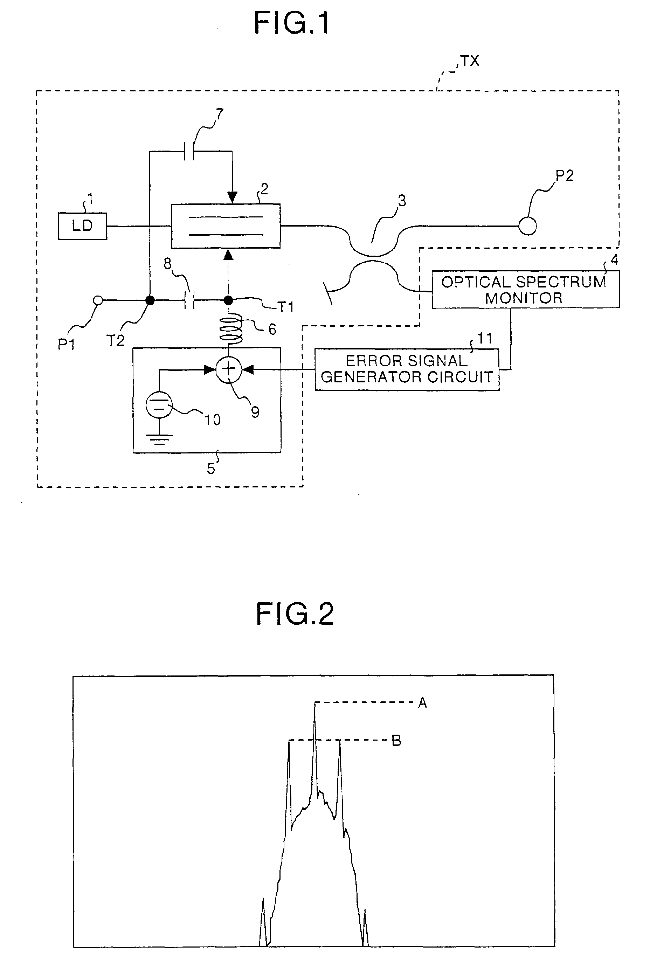

Fig. 1 is a block diagram showing a structure of an optical transmission apparatus according to a first embodiment of this invention. Continuous light emitted from a light source 1 is input into an optical modulator of Mach-Zehnder type ("Mach-Zehnder optical modulator") 2 that uses lithium niobate. A driving signal for driving the Mach-Zehnder optical modulator 2 is applied to the Mach-Zehnder optical modulator 2 via a node T2 and capacitors 7 and 8. Further, a bias voltage is applied to the Mach-Zehnder optical modulator 2 via a node T1.

An output optical signal modulated by the Mach-Zehnder optical modulator 2 is output to an output terminal P2 via a multiplexer 3. At the same time, a part of the output optical signal is input into an optical spectrum monitor 4. The optical spectrum monitor 4 monitors an optical spectrum of the output optical signal, and outputs a monitor result to an error signal generator circuit 11. The error signal generator circuit 11 generates an error signal corresponding to a drift of an operation point of the Mach-Zehnder optical modulator 2 based on the monitor result of the optical spectrum monitor 4, and outputs a result to a bias voltage control circuit 5.

The bias voltage control circuit 5 has a DC power source 10 and an adder 9. The adder 9 adds an error signal output from the error signal generator circuit 11 and an error signal output from the DC power source 10 together, and outputs the result of addition as a bias voltage to the Mach-Zehnder optical modulator 2 from the node T1 via an inductor 6. Thus, the driving signal and the bias voltage are supplied to the Mach-Zehnder optical modulator 2 from the node T1.

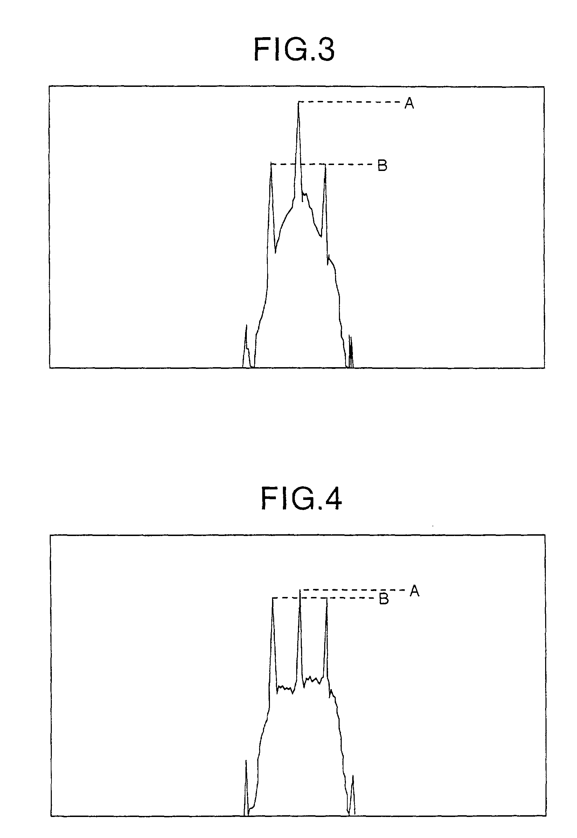

An error signal generation processing of the error signal generator circuit 11 shown in Fig. 1 will be explained below with reference to Fig. 2 to Fig. 4. Fig. 2 is a diagram showing an optical spectrum wave form monitored by the optical spectrum monitor 4 when the bias voltage (phase δ) has a proper value. Fig. 3 is a diagram showing an optical spectrum waveform when the bias voltage is slightly higher than its proper value. Further, Fig. 4 is a diagram showing an optical spectrum waveform when the bias voltage slightly lower than its proper value. The optical spectrum waveforms shown in Fig. 2 to Fig. 4 are the waveforms of a sinusoidal wave when an optical data pulse signal has been input into the Mach-Zehnder optical modulator 2 from the light source 1 and when the driving signal is synchronous with this optical data pulse signal.

As shown in Fig. 3, when the bias voltage is slightly higher than the proper value of the voltage, a difference between light intensity "A" of a carrier frequency component and light intensity "B" of a first sideband frequency component is larger than a difference when the bias voltage has the proper value (see Fig 2). On the other hand, as shown in Fig. 4, when the bias voltage is slightly lower than the proper value, the same difference is smaller value than the difference when the bias voltage has the proper value.

Therefore, the error signal generator circuit 11 can obtain a value "A/B" by dividing the light intensity "A" of the carrier frequency component by the light intensity "B" of the first sideband frequency component, and generate this value as an error signal. If the value of "A/B" is larger than the value of "A/B" when the bias voltage has the proper value, a decision is made that the bias voltage is slightly higher than the proper value. An error signal corresponding to this decision is output to the bias voltage control circuit 5. On the other hand, if the value of "A/B" is smaller than the value of "A/B" when the bias voltage has the proper value, a decision is made that the bias voltage is slightly lower than the proper value. An error signal corresponding to this decision is output to the bias voltage control circuit 5. Based on this feedback control, the bias voltage is controlled at the proper value. It is also possible to generate an error signal based on a difference "A - B" between the light intensity "A" of the carrier frequency component and the light intensity "B" of the first sideband frequency component, instead of "A/B". In this case, a sign of the differential value shows straight a control direction of the bias voltage.

In the above-described first embodiment, the two-electrode type Mach-Zehnder optical modulator 2 having two electric signal input terminals is used. However, it is also possible to carry out the above-described bias voltage control by using a one-electrode type Mach-Zehnder optical modulator 2 instead of using the two-electrode type Mach-Zehnder optical modulator.

According to the first embodiment, an error signal of an operation point of the Mach-Zehnder optical modulator 2 is detected by monitoring the optical spectrum of an output optical signal output from the Mach-Zehnder optical modulator 2. Then, this error signal is fed back to the bias voltage control circuit 5. Therefore, it is possible to suppress the quality degradation of the output optical signal due to the drift of the operation point of the Mach-Zehnder optical modulator 2. Further, in this case, it is also possible to suppress the quality degradation of the output optical signal by using a driving signal of 10 GHz or above as this does not generate a waveform distortion.

A second embodiment of this invention will be explained here. In the above-described first embodiment, an error signal of an operation point of the Mach-Zehnder optical modulator 2 is detected by monitoring the optical spectrum of an output optical signal. This error signal is fed back to the bias voltage control circuit 5 to control the bias voltage. In this second embodiment, further a signal level of the driving signal is controlled using a result of monitoring the optical spectrum of the output optical signal.

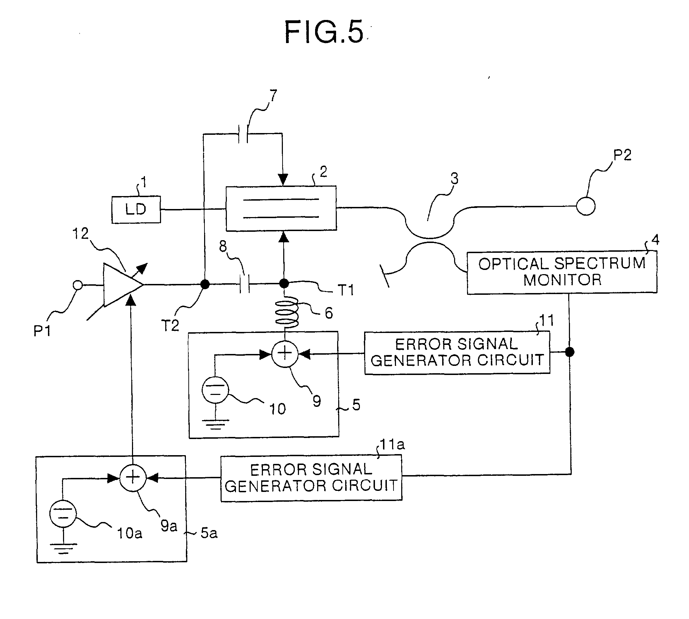

Fig. 5 is a block diagram showing a structure of an optical transmission apparatus according to the second embodiment of this invention. This optical transmission apparatus has a variable amplifier 12 for variably adjusting a signal level of a driving signal further provided at a front stage of the node T2. Further, this optical transmission apparatus has a modulator driving circuit 5a for controlling a signal level of the variable amplifier 12 based on a monitor result of the optical spectrum monitor 4, and an error signal generator circuit 11a for generating an error signal to this modulator driving circuit 5a. Other configuration is the same as that of the first embodiment and components having identical structure or functions are provided with like reference numbers.

The error signal generator circuit 11a generates an error signal for controlling a signal level of a driving signal based on a monitor result of the optical spectrum monitor 4, and outputs this error signal to the modulator driving circuit 5a. The modulator driving circuit 5a carries out a feedback control for controlling the variable amplifier 12 based on this error signal, so that the modulator driving circuit 5a can suppress the drift of the driving signal input into the Mach-Zehnder optical modulator 2.

Further, response time constants of the error signal generator circuits 11 and 11a are set to different values. While the two-electrode type Mach-Zehnder optical modulator 2 is used in the above-described second embodiment, it is also possible to carry out the bias voltage control and the signal level control of the driving signal described above by using a one-electrode type Mach-Zehnder optical modulator 2 instead of using the two-electrode type Mach-Zehnder optical modulator.

According to the second embodiment, an error signal for controlling a bias voltage is generated based on the result of monitoring of the optical spectrum monitor 4, thereby to control the bias voltage. At the same time, an error signal for controlling a signal level of a driving signal is generated, thereby to control the signal level of the driving signal. Therefore, it is possible to suppress the quality degradation of the output optical signal due to the drift of the signal level of the driving signal applied to the Mach-Zehnder optical modulator 2.

A third embodiment of this invention will be explained below. In the above-described first and second embodiments, a bias voltage control or a signal level control of a driving signal is carried out based on a monitor result of the optical spectrum monitor 4. In the third embodiment, a phase difference between driving signals applied to two electrodes of the Mach-Zehnder optical modulator 2 is controlled.

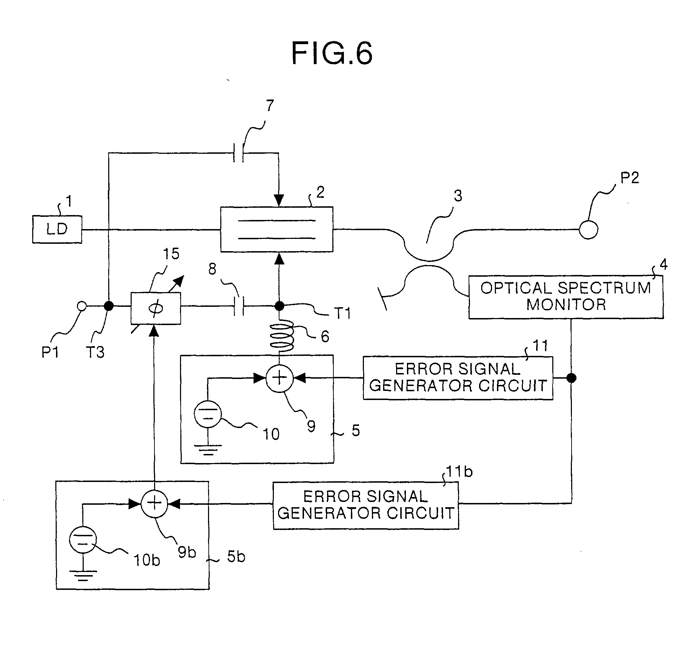

Fig. 6 is a block diagram showing a structure of an optical transmission apparatus according to the third embodiment of this invention. This optical transmission apparatus has a variable phase shifter 15 provided instead of the variable amplifier 12 of the optical transmission apparatus shown in Fig. 5. The variable phase shifter 15 adjusts a phase difference between driving signals applied to two electrodes of the Mach-Zehnder optical modulator 2. An error signal generator circuit 11b generates an error signal for making the variable phase shifter 15 carry out a phase difference control, and outputs the error signal to a phase shifter driving circuit 5b. The phase shifter driving circuit 5b makes the variable phase shifter 15 carry out a phase difference control corresponding to the error signal. Other configuration is the same as that of the second embodiment and components having identical structure or functions are provided with like reference numbers.

According to the third embodiment, an error signal for controlling a bias voltage is generated based on a monitor result of the optical spectrum monitor 4, thereby to control the bias voltage. At the same time, a phase difference between driving signals applied to two electrodes of the Mach-Zehnder optical modulator 2 is controlled. Therefore, it is possible to suppress the quality degradation of the output optical signal due to the drift of this phase difference.

A fourth embodiment of this invention will be explained below. In the above-described first to third embodiments, a difference between the light intensity "A" of the carrier frequency component and the light intensity "B" of the first sideband frequency component in the optical spectrum are obtained. Then, an error signal is generated by using the light intensities "A" and "B". However, in the fourth embodiment, light intensity within a specific narrow band and light intensity of the whole are detected, and an error signal is generated based on a result of this detection.

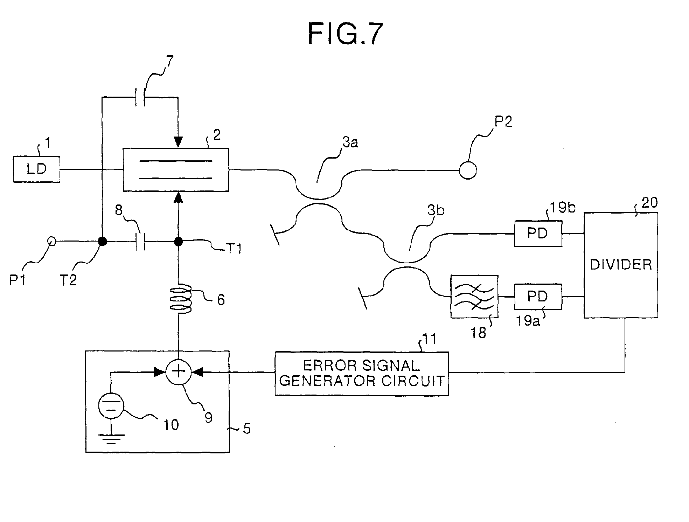

Fig. 7 is a block diagram showing a structure of an optical transmission apparatus according to the fourth embodiment of this invention. In this optical transmission apparatus, a branching filter 3b branches a part of an output optical signal branched by a branching filter 3a into further two signals. A narrow-band optical filter 18 filters one of the two branched output optical signals to extract an extremely changed portion on the optical spectrum corresponding to a difference of the Mach-Zehnder optical modulator 2. A photodiode ("PD") 19a monitors the light intensity of the extracted narrow band. In the mean time, a photodiode 19b ("PD") monitors the light intensity of the total spectrum of the other optical signal of the two branched output optical signals. A divider 20 divides the light intensity monitored by the photodiode 19a by the light intensity monitored by the photodiode 19b. Then, the divider 20 outputs a result of this division to the error signal generator circuit 11. The error signal generator circuit 11 generates an error signal based on the result of this division, and outputs this result to the bias voltage control circuit 5. The bias voltage control circuit 5 applies a bias voltage added with this error signal to the Mach-Zehnder optical modulator 2 via the inductor 6.

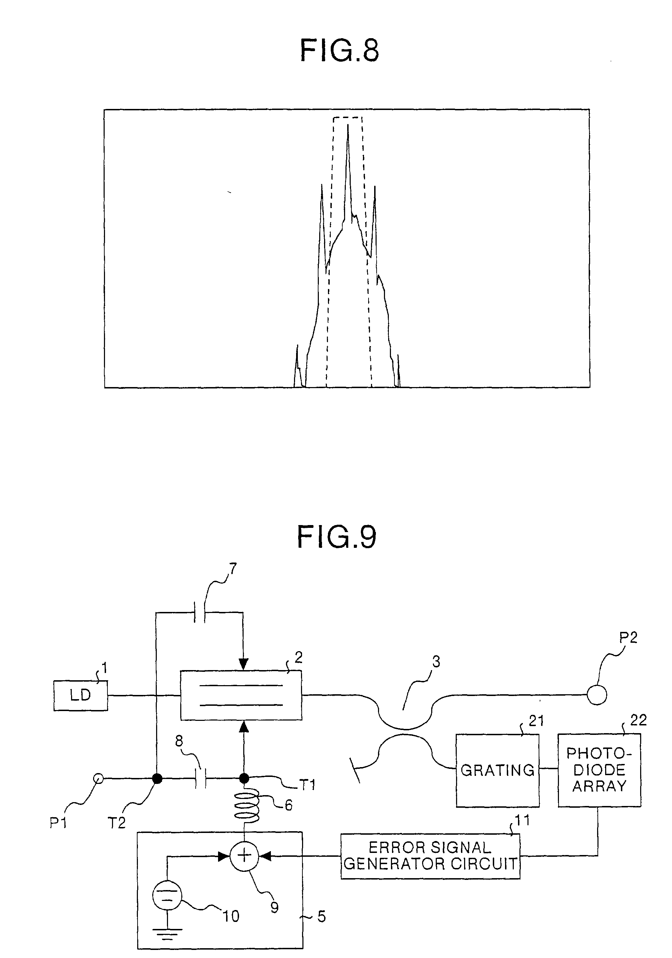

The optical filter 18 transmits a band shown within a broken line in Fig. 8, that is, a band near the carrier frequency component, and the photodiode 19a monitors the light intensity of the band shown within this broken line. The band near the carrier frequency component is monitored because a change on the optical spectrum is extreme according to the bias voltage error, like in the first embodiment.

In this case, when the light intensity of the optical signal input into the Mach-Zehnder optical modulator 2 is kept constant, the light intensity monitored by the photodiode 19b becomes constant. Therefore, the error signal generator circuit 11 can use the light intensity monitored by the photodiode 19a as it is as the error signal. On the contrary, when the light intensity of the optical signal input into the Mach-Zehnder optical modulator 2 is constant, it can be structured such that the optical filter 18 is directly connected to the branching filter 3a, and the light intensity monitored by the photodiode 19a is directly output to the error signal generator circuit 11. In this case, it is possible not to provide the branching filter 3b, the photodiode 19b, and the divider 20. As a result, the structure becomes simple.

Further, the branching filter 3b, the optical filter 18, and the photodiodes 19a and 19b may be provided in place of the optical spectrum monitor 4 shown in Fig. 5 or Fig. 6. According to such configuration, it is possible to carry out a signal level control of the driving signal applied to the Mach-Zehnder optical modulator 2 or a phase difference control of the two driving signals applied to the two-electrode type Mach-Zehnder optical modulator 2, in a similar manner to that of the second and third embodiments.

According to the fourth embodiment, the narrow-band optical filter 18 monitors a band having an extreme change on the optical spectrum corresponding to a bias voltage error of the Mach-Zehnder optical modulator 2. A ratio of this monitor result to the light intensity of the total optical spectrum is obtained, and this is used as an error signal, thereby controlling the bias voltage. Therefore, it is possible to suppress the quality degradation of the output optical signal attributable to the bias voltage error.

A fifth embodiment of this invention will be explained below. In this fifth embodiment, a grating 21 and a photodiode array 22 monitor an optical spectrum of an output optical signal output from the Mach-Zehnder optical modulator 2.

Fig. 9 is a block diagram showing a structure of an optical transmission apparatus according to the fifth embodiment of this invention. This optical transmission apparatus has the grating (Blazed grating) 21 and the photodiode array 22 provided in place of the optical spectrum monitor 4 shown in Fig. 1. Other configuration is the same as that of the first embodiment and components having identical structure or functions are provided with like reference numbers.

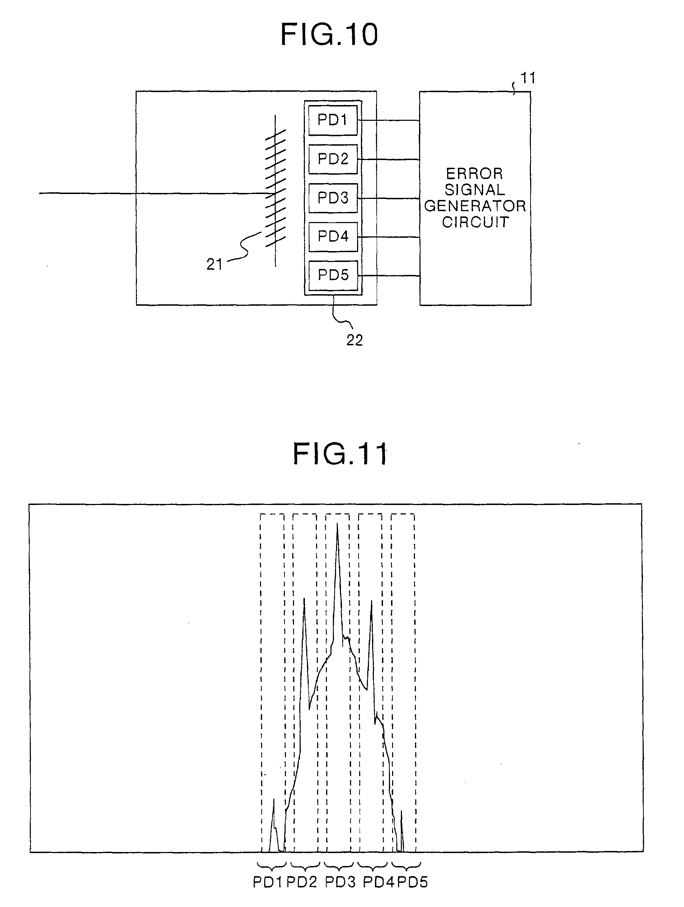

The monitor operation of the optical spectrum by the grating 21 and the photodiode array 22 will be explained with reference to Fig. 10 and Fig. 11. Fig. 10 is a diagram showing a detailed structure of the grating 21 and the photodiode array 22. A part of an output optical signal input from the branching filter 3 is spatially divided into a spectrum by the grating 21, and a result is irradiated onto the photodiode array 22. In this case, by adjusting the spectral angle of the grating 21 beforehand, it is possible to determine a band in which photodiodes PD1 to PD5 constituting the photodiode array 22 receive lights.

For example, as shown in Fig. 11, when it is so arranged that the photodiode PD1 receives the low-frequency portion, and the photodiode PD5 receives the high-frequency portion of the optical spectrum provided by the grating 21 respectively, the photodiodes PD1 to PD5 monitor the light intensity of the band sequentially divided on the optical spectrum. In the case of the optical spectrum shown in Fig. 11, the photodiode PD3 monitors the light intensity of the portion near the carrier frequency component, and the photodiodes PD2 and PD4 monitor the light intensity of the portions near the first sideband frequency component respectively.

When the light intensities received by the photodiodes PD1 to PD5 are input into the error signal generator circuit 11, the error signal generator circuit 11 can generate error signals based on the light intensity monitored by the photodiode PD3 and the light intensities monitored by the photodiodes PD2 and PD4, in a similar manner to that of the first embodiment.

Further, the grating 21 and the photodiode array 22 may be provided in place of the optical spectrum monitor 4 shown in Fig. 5 or Fig. 6. According to such configuration, it is possible to carry out a signal level control of the driving signal applied to the Mach-Zehnder optical modulator 2 or a phase difference control of the two driving signals applied to the two-electrode type Mach-Zehnder optical modulator 2, in a similar manner to that of the second and third embodiments.

Further, an optical device using a photonic crystal capable of spatially dividing the input optical signal into a spectrum may be used in place of the grating 21.

According to the fifth embodiment, the grating 21 spatially divides the output optical signal into a spectrum. The photodiode array 22 is disposed corresponding to this spatial spectrum. Each photodiode constituting the photodiode array 22 monitors the light intensity of each band of the divided optical spectrum. Further, the error signal generator circuit 11 generates an error signal based on the light intensity monitored by each photodiode, thereby carrying out a bias voltage control. Therefore, it is possible to suppress the quality degradation of the output optical signal attributable to the bias voltage error.

A sixth embodiment of this invention will be explained below. In the above-described first to fifth embodiments, a single-wavelength light output from the light source 1 has been modulated and this result has been output. However, in the sixth embodiment, it is also possible to carry out a bias voltage control in high precision when a wavelength-multiplexed light consisting of a plurality of modulation-output different wavelength lights is generated.

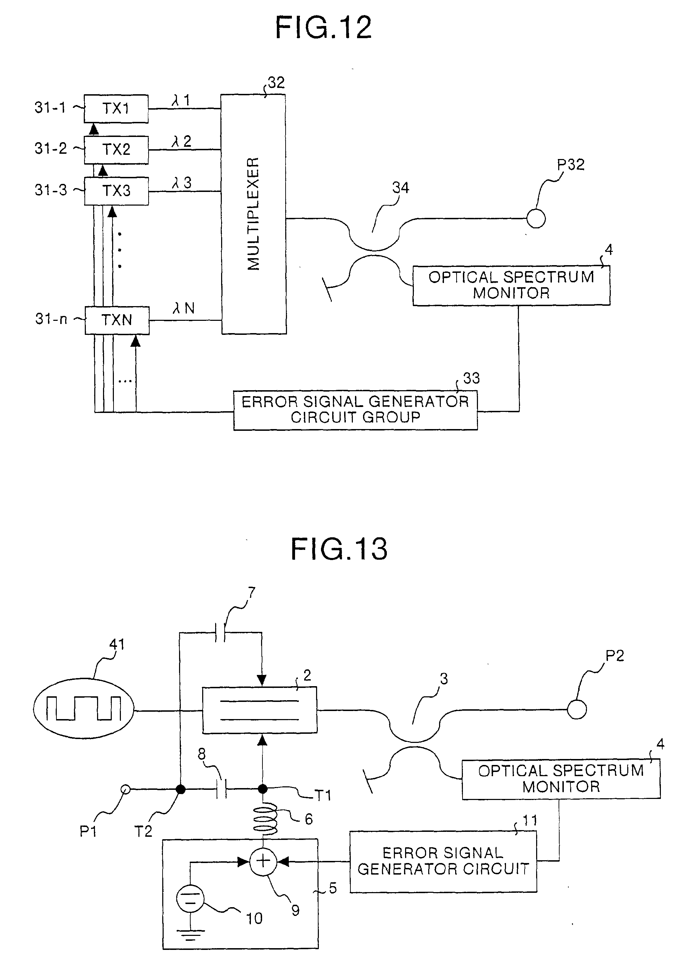

Fig. 12 is a block diagram showing a structure of an optical transmission apparatus according to the sixth embodiment of this invention. This optical transmission apparatus has a plurality of transmitting units 31-1 to 31-n. Each of the transmitting units 31-1 to 31-n has a structure which is same as the structure of the transmitting unit TX shown in Fig. 1. That is, each transmitting units 31-1 to 31-n has the optical source 1, the Mach-Zehnder optical modulator 2, the branching filter 3, the bias voltage control circuit 5, the inductor 6, and the capacitors 7 and 8. The respective light sources 1 of the transmitting units 31-1 to 31-n emit lights having mutually different specific wavelengths $\lambda 1$ to $\lambda n$. Respective output optical signals output from the transmitting units 31-1 to 31-n have wavelength $\lambda 1$ to $\lambda n$ com-

ponents.

A multiplexer 32 multiplexes the output optical signals from the transmitting units 31-1 to 31-n, and outputs a result to a branching filter 34. The branching filter 34 outputs the multiplexed output optical signal from an output terminal P32 in the same manner as the branching filter 3, and also outputs a part of the multiplexed output optical signal to the optical spectrum monitor 4. The optical spectrummonitor 4 monitors the optical spectrum of the input output optical signal in a similar manner to the optical spectrummonitor 4 shown in Fig. 1. In this case, the output optical signal has a plurality of different wavelength λ1 to λn components. Therefore, a plurality of optical spectrum waveforms shown in Fig. 2, for example, are formed on the optical spectrum. A monitor result of this optical spectrum monitor 4 is output to an error signal generator circuit group 33.

The error signal generator circuit group 33 has the error signal generator circuit 11 shown in Fig. 1 by the number corresponding to the transmitting units 31-1 to 31-n. Each error signal generator circuit that constitutes the error signal generator circuit group 33 generates a corresponding error signal based on a corresponding monitor result, and outputs the error signal to a bias voltage control circuit 5 within a corresponding one of the transmitting units 31-1 to 31-n. With this arrangement, the bias voltage control of each Mach-Zehnder optical modulator 2 within each of the transmitting units 31-1 to 31-n is carried out.

As described above, the optimum operation point of each Mach-Zehnder optical modulator 2 using lithium niobate is different depending on the wavelength. Therefore, when a bias voltage control is carried out based on the same error signal to each Mach-Zehnder optical modulator 2 that carries out a modulation operation that is different for each wavelength, it is not possible to achieve a proper bias voltage control of each Mach-Zehnder optical modulator 2. However, in the sixth embodiment, the error signal generator circuit group 33 that has the error signal generator circuits 11 corresponding to the respective Mach-Zehnder optical modulator 2 carries out the individual control. Therefore, it is possible to carry out a proper bias voltage control to all the Mach-Zehnder optical modulators 2.

Further, the sixth embodiment can be applied to the second embodiment. That is, each of the transmitting units 31-1 to 31-n may be further provided with the variable amplifier 12 for adjusting a signal level of the driving signal, and has a modulator driving circuit 5a for controlling this variable amplifier 12. Further, the error signal generator circuit group 33 may be provided with a plurality of error signal generator circuits 11a corresponding to the transmitting units 31-1 to 31-n respectively. The variable amplifier 12 of each of the transmitting units 31-1 to 31-n is controlled by the error signal generated by each error signal generator circuit 11a via each modulator driving circuit 5a. Therefore, it is possible to suppress the quality degradation of each output optical signal due to the drift of the signal level of the driving signal.

Further, the sixth embodiment can be applied to the third embodiment. That is, each of the transmitting units 31-1 to 31-n may be further provided with a phase shifter 15 for adjusting a phase difference between driving signals applied to the two electrodes of the Mach-Zehnder optical modulator 2, and has a phase shifter driving circuit 5b for controlling this phase shifter 15. Further, the error signal generator circuit group 33 has a plurality of error signal generator circuits 11b corresponding to the transmitting units 31-1 to 31-n respectively. The phase shifter 15 of each of the transmitting units 31-1 to 31-n is controlled by the error signal generated by each error signal generator circuit 11b via each phase shifter driving circuit 5b. Therefore, it is possible to suppress the quality degradation of each output optical signal due to the drift of the phase difference between bias voltages.

According to the sixth embodiment, it is possible to carry out a bias voltage control, a signal level control of a driving signal, and a phase difference control of a phase shifter, for each of the transmitting units 31-1 to 31-n that modulate mutually different wavelength lights. Therefore, it is possible to securely suppress the quality degradation of each output optical signal in the case of generating a wavelength-multiplexed light.

A seventh embodiment of this invention will be explained below. In the above-described first to sixth embodiments, the light source 1 outputs a continuous light, and this continuous light is modulated based on a driving signal. However, in the seventh embodiment, the light source 1 is arranged to output an optical pulse or an optical data pulse, and the driving signal is synchronous with this optical pulse or this optical data pulse.

Fig. 13 is a block diagram showing a structure of an optical transmission apparatus according to the seventh embodiment of this invention. The light source 41 outputs an optical pulse or an optical data pulse. Other configuration is the same as that of the first embodiment and components having identical structure or functions are provided with like reference numbers.

A light source 41 can be realized by, for example, a device for outputting an optical pulse by gain-switching a semiconductor laser, a ring oscillator using a fiber-type optical amplifier, and a device for modulating a continuous light in a pulse shape and outputting this by a Mach-Zehnder optical modulator. In this case, the optical pulse output from the light source 41 is modulated by the Mach-Zehnder optical modulator 2. Therefore, the output optical signal output from the output terminal P2 becomes a pulse-modulated RZ signal.

According to the seventh embodiment, when the optical signal input into the Mach-Zehnder optical modulator 2 is an optical pulse or an optical data pulse, the optical spectrummonitor 4 monitors the output optical signal output from the Mach-Zehnder optical modulator 2. An error signal is generated based on a result of this monitor. Then, a bias voltage control is carried out. Therefore, it is possible to suppress the quality degradation of the output optical signal due to a bias voltage error.

As explained above, according to one aspect of this invention, the monitoring unit monitors an optical spectrum of an output optical signal output from the optical modulator, and the bias voltage controlling unit feedback controls the bias voltage based on an optical spectrum shape monitored by the monitoring unit. Therefore, it is possible to easily carry out a bias voltage control even when the band of the driving signal becomes 10 GHz or above. As a result, there is an effect that it is possible to suppress the quality degradation of the output optical signal output from the modulator.

Furthermore, the monitoring unit monitors an optical spectrum of an output optical signal output from the optical modulator, and the driving signal level control unit feedback controls the signal level of the driving signal based on an optical spectrum shape monitored by the monitoring unit. Therefore, it is possible to easily carry out a signal level control of the driving signal even when the band of the driving signal becomes 10 GHz or above. As a result, there is an effect that it is possible to suppress the quality degradation of the output optical signal due to the drift of the driving signal.

Furthermore, the monitoring unit monitors an optical spectrum of an output optical signal output from the optical modulator, and the phase difference level control unit feedback controls the phase difference between the two driving signals input into the optical modulator based on an optical spectrum shape monitored by the monitoring unit. Therefore, there is an effect that it is possible to suppress the quality degradation of the output optical signal due to the drift of the phase difference between driving signals even when the band of the driving signal becomes 10 GHz or above.

Furthermore, the multiplexer combines output optical signals obtained by modulating optical signals having wavelengths different from each other that have been output from the light sources of the respective transmission units . The monitoring unit monitors a multi-wavelength optical spectrum of an output optical signal output from the multiplexer. The bias voltage controlling unit feedback controls the bias voltage of each bias applying unit for each modulator of the optical transmission unit based on a multi-wavelength optical spectrum shape monitored by the monitoring unit. Therefore, it is possible to easily carry out a bias voltage control for each modulator even when a waveform-multiplexed light is output for transmission. As a result, there is an effect that it is possible to suppress the quality degradation of the output optical signal output from the modulator.

Furthermore, the multiplexer combines output optical signals obtained by modulating optical signals having wavelengths different from each other that have been output from the light sources of the respective transmission units . The monitoring unit monitors a multi-wavelength optical spectrum of an output optical signal output from the multiplexer. The driving signal level control unit feedback controls the signal level of each driving signal of each optical transmission unit based on the optical spectrum shape monitored by the monitoring unit. Therefore, there is an effect that it is possible to suppress the quality degradation of the output optical signal due to the drift of the driving signal of each modulator even when a waveform-multiplexed light is output for transmission.

Furthermore, the multiplexer combines output optical signals obtained by modulating optical signals having wavelengths different from each other that have been output from the light sources of the respective transmission units . The monitoring unit monitors a multi-wavelength optical spectrum of an output optical signal output from the multiplexer. The phase difference control unit feedback controls the phase difference of each phase shifter based on the optical spectrum shape monitored by the monitoring unit. Therefore, there is an effect that it is possible to suppress the quality degradation of the output optical signal due to the drift of the phase difference between the two driving signals of each modulator even when a waveform-multiplexed light is output for transmission.

Furthermore, the monitoring unit is structured by an optical filter for extracting an optical signal in a predetermined band of an output optical signal output from the optical modulator. The optical filter detects a predetermined band that characteristically shows a change such as a bias voltage error. Based on a result of this, a bias voltage control, a driving signal level control, and a phase difference control are carried out. Therefore, there is an effect that it is possible to suppress the quality degradation of the output optical signal due to the drift of the bias voltage, the driving signal level, and the phase difference.

Furthermore, the grating spatially divides an output optical signal output from the optical modulator into a spectrum, and the optical detection array monitors the optical spectrum corresponding to a spectrum obtained by the grating. Therefore, there is an effect that it is possible to more easily carry out a control like the bias voltage control based on the optical spectrum shape.

Furthermore, the light source is a light source that outputs an optical pulse or an optical data pulse that is synchronous with the driving signal. Therefore, there is an effect that it is possible to suppress the quality degradation of the output optical signal by the control like the bias voltage control based on the optical spectrum shape even when the optical signal of an optical pulse or an optical data pulse is modulated and output.

According to another aspect of this invention, an optical spectrum of an output optical signal that has been modulated and output from the optical modulator is monitored at the monitoring step, and the bias voltage is controlled based on an optical spectrum shape monitored at the monitoring step at the bias voltage control step. Therefore, it is possible to easily carry out a bias voltage control even when the band of the driving signal becomes 10 GHz or above. As a result, there is an effect that it is possible to suppress the quality degradation of the output optical signal output from the modulator.

According to another aspect of this invention, an optical spectrum of an output optical signal that has been modulated and output from the optical modulator is monitored at the monitoring step, and the signal level of the driving signal is controlled based on the monitored optical spectrum shape at the driving signal level control step. Therefore, it is possible to easily carry out a signal level control of the driving signal even when the band of the driving signal becomes 10 GHz or above. As a result, there is an effect that it is possible to suppress the quality degradation of the output optical signal due to the drift of the driving signal.

According to another aspect of this invention, an optical spectrum of an output optical signal that has been modulated and output from the optical modulator is monitored at the monitoring step, and the phase difference between two driving signals input into the electric input terminals is controlled based on the monitored optical spectrum shape at the phase difference control step. Therefore, there is an effect that it is possible to suppress the quality degradation of the output optical signal due to the drift of the phase difference between driving signals even when the band of the driving signal becomes 10 GHz or above.

Although the invention has been described with respect to a specific embodiment for a complete and clear disclosure, the appended claims are not to be thus limited but are to be construed as embodying all modifications and alternative constructions that may occur to one skilled in the art which fairly fall within the basic teaching herein set forth.

**Claims**

1. An optical transmission apparatus comprising:

> an optical modulator (2) of Mach-Zehnder type;
> a light source (1, 41) which inputs optical signal into said optical modulator (2);
> a driving signal outputting unit (P1) which inputs into said optical modulator (2) a driving signal for modulating the optical signal input into said optical modulator (2) by said light source (1, 41);
> a bias applying unit (10) which applies a bias voltage to said optical modulator (2);
> a monitoring unit (4) which monitors an optical spectrum of an output optical signal output from said optical modulator (2); and
> a bias voltage controlling unit (5) which controls the bias voltage based on a shape of the optical spectrum monitored by said monitoring unit (4).

2. The optical transmission apparatus according to claim 1, further comprising a driving signal level control unit (12) which controls a signal level of the driving signal based on the shape of the optical spectrum monitored by said monitoring unit (4).

3. The optical transmission apparatus according to claim 1 or 2, wherein said optical modulator (2) is a two-electrode type optical modulator (2) having two electric signal input terminals, and

> said optical transmission apparatus further including,
> a phase shifter (15) which adjusts a phase difference between the two driving signals input into said optical modulator (2); and
> a phase difference control unit (5b) which controls a phase difference of said phase shifter (15) based on an optical spectrum shape monitored by said monitoring unit (4).

4. An optical transmission apparatus comprising:

> a plurality of optical transmission units (31-1 to 31-n), each optical transmission unit including,

>> an optical modulator (2) of Mach-Zehnder type;
>> a light source (1, 41) which inputs an optical signal into said optical modulator (2);
>> a driving signal outputting unit (P1) which inputs into said optical modulator (2) a driving signal for modulating the optical signal input into said optical modulator (2) by said light source (1, 41); and
>> a bias applying unit (10) which applies a bias voltage to said optical modulator (2), with optical signals having wavelengths different from each other output from the respective light sources (1);

> a multiplexer (32) which combines output optical signals output from said optical modulators (2) of said optical transmission units (31-1 to 31-n);
> a monitoring unit (4) which monitors a multi-wavelength optical spectrum of an output optical signal output from said multiplexer (32); and
> a bias voltage controlling unit (31-1 to 31-n) which controls a bias voltage of each bias applying unit of said optical transmission unit based on a shape of the multi-wavelength optical spectrum monitored by said monitoring unit (4).

**5.** The optical transmission apparatus according to claim 4, further comprising driving signal level control unit (12) which controls a signal level of each driving signal of each optical transmission unit based on the shape of the optical spectrum monitored by said monitoring unit (4).

**6.** The optical transmission apparatus according to claim 4 or 5, wherein each optical modulator (2) of each optical transmission unit (31-1 to 31-n) is a two-electrode type optical modulator (2) having two electric signal input terminals, and

each optical transmission unit further includes a phase shifter (15) which adjusts a phase difference between the two driving signals input into said optical modulator (2); and said optical transmission apparatus further includes a phase difference control unit (5b) which controls a phase difference of said phase shifter (15) based on an optical spectrum shape monitored by said monitoring unit (4).

**7.** The optical transmission apparatus according to any one of claims 1 to 6, wherein said monitoring unit (4) is an optical filter for extracting an optical signal in a predetermined band of an output optical signal output from said optical modulator (2).

**8.** The optical transmission apparatus according to any one of claims 1 to 6, wherein said monitoring unit (4) includes,

a grating (21) for spatially dividing an output optical signal output from said optical modulator (2) into a spectrum; and an optical detection array (22) having optical detection elements disposed in an array shape corresponding to a spectrum obtained by said grating (21).

**9.** The optical transmission apparatus according to any one of claims 1 to 8, wherein said light source (41) outputs an optical pulse or an optical data pulse that is synchronous with the driving signal.

**10.** An output stabilization control method, for an optical modulator (2) used in an optical transmission apparatus, of inputting an optical signal to a Mach-Zehnder optical modulator (2), applying a driving signal and a bias voltage, and modulating and outputting the optical signal based on the driving signal, the output stabilization control method comprising:

a monitoring step of monitoring an optical spectrum of an output optical signal that has been modulated and output from said optical modulator (2); and

a bias voltage control step of controlling the bias voltage based on an optical spectrum shape monitored at the monitoring step.

**11.** An output stabilization control method, for an optical modulator (2) used in an optical transmission apparatus, of inputting an optical signal to a Mach-Zehnder optical modulator (2), applying a driving signal and a bias voltage, and modulating and outputting the optical signal based on the driving signal, the output stabilization control method comprising:

a monitoring step of monitoring an optical spectrum of an output optical signal that has been modulated and output from said optical modulator (2); and a driving signal level control step of controlling a signal level of the driving signal based on an optical spectrum shape monitored at the monitoring step.

**12.** An output stabilization control method, for an optical modulator (2) to be used in an optical transmission apparatus, of inputting an optical signal into a Mach-Zehnder optical modulator (2) having two electric signal input terminals, applying a driving signal and a bias voltage, and modulating and outputting the optical signal based on the driving signal, the output stabilization control method comprising:

a monitoring step of monitoring an optical spectrum of an output optical signal that has been modulated and output from said optical modulator (2); and a phase difference control step of controlling a phase difference between two driving signals input into said electric input terminals based on an optical spectrum shape monitored at the monitoring step.

# FIG.1

# FIG.2

# FIG.3

# FIG.4

# FIG.5

LD — 1

7

2

3

P2

4
OPTICAL SPECTRUM
MONITOR

12

8

T1

T2

6

P1

11
ERROR SIGNAL
GENERATOR CIRCUIT

10

9

5

11a
ERROR SIGNAL
GENERATOR CIRCUIT

10a

9a

5a

# FIG.6

# FIG.7

# FIG.8

# FIG.9

# FIG.10

# FIG.11

PD1 PD2 PD3 PD4 PD5

# FIG.12

# FIG.13

# FIG.14

# FIG.15

PERFORMANCE
CHARACTERISTICS
CURVE
130

132
OUTPUT OPTICAL
SIGNAL

131
DRIVING SIGNAL

# FIG.16

PERFORMANCE
CHARACTERISTICS
CURVE
140

142
OUTPUT OPTICAL
SIGNAL

141
DRIVING SIGNAL

# FIG.17

PERFORMANCE
CHARACTERISTICS
CURVE
150

152
OUTPUT OPTICAL
SIGNAL

151
DRIVING SIGNAL